# EUROPEAN PATENT APPLICATION

(11) **EP 4 661 236 A1**
(43) Date of publication of application: **10.12.2025**
(21) Application number: 23920695.6
(22) Date of filing: 25.07.2023
(51) Int. Cl.: H02J 3/32

(54) **CHARGING AND DISCHARGING CONTROL METHOD AND APPARATUS FOR ENERGY STORAGE SYSTEM, AND DEVICE**

(30) Priority: 07.02.2023 CN 202310095057
(71) Applicant: GD Midea Air-Conditioning Equipment Co., Ltd., Foshan, Guangdong 528311 (CN)
(72) Inventor: CHEN, Xin, Foshan, Guangdong 528311 (CN); JIANG, Haihao, Foshan, Guangdong 528311 (CN); ZENG, Xianjie, Foshan, Guangdong 528311 (CN); SHI, Haixu, Foshan, Guangdong 528311 (CN); QIU, Yu, Foshan, Guangdong 528311 (CN); HUANG, Wei, Foshan, Guangdong 528311 (CN)
(74) Representative: Ran, Handong
(86) International application number: PCT/CN2023/109074
(87) International publication number: WO 2024/164499

(57) **Abstract**

Disclosed are a charging and discharging control method and apparatus for an energy storage system, and a device. The charging and discharging control method for an energy storage system comprises: acquiring the running condition of an energy storage system (10) in an effective operation state; if it is determined, according to the running condition, that a preset protection trigger condition for a battery module (120) is satisfied currently, controlling an LLC resonant converter (111) to be in an operation mode and switching a boost-buck converter (112) from the operation mode to a standby mode, such that the battery module (120) enters a standby state; and when the battery module (120) is triggered, on the basis of an external change of the energy storage system (10), to exit from the standby state, the energy storage system (10) returning to the effective operation state.

## Description

### CROSS-REFERENCE TO RELATED APPLICATION

This application claims a priority to Chinese patent application No. 202310095057.3, filed on February 7, 2023, the entire contents of which are incorporated herein by reference.

### TECHNICAL FIELD

The invention relates to the technical field of charging and discharging control, and in particular to a charging and discharging control method and device for an energy storage system, and to an apparatus.

### BACKGROUND

An energy storage system consists of a battery module and a bidirectional DC-to-DC converter (bidirectional DC-DC converter). The bidirectional DC-to-DC converter may comprise an LLC resonant converter and a boost-buck converter which are cascaded. The LLC resonant converter is used to increase a voltage of the battery module to be within an effective controllable range of the boost-buck converter to meet requirements of a DC-bus voltage. Therefore, it is required to carry out a linkage control on the battery module and bidirectional DC-to-DC converter of the energy storage system. The current strategy for the linkage control of the battery module and bidirectional DC-to-DC converter is too simple, resulting in excessive battery degradation.

### SUMMARY

A charging and discharging control method and device for an energy storage system and an apparatus are provided according to embodiments of the invention, to solve a technical problem of excessive battery degradation.

According to a first aspect of the invention, a charging and discharging control method for an energy storage system is provided. The energy storage system comprises a bidirectional DC-to-DC converter and a battery module. The bidirectional DC-to-DC converter comprises an LLC resonant converter and a boost-buck converter which are used to be sequentially cascaded with the battery module. The method comprises: acquiring a running condition of the energy storage system in an effective operational state; controlling, if it is determined according to the running condition that a preset protection trigger condition for the battery module is satisfied currently, the LLC resonant converter to be in an operational mode and switching the boost-buck converter from an operational mode to a standby mode to make the battery module to enter a standby state; and controlling, when the battery module is triggered to exit the standby state based on an external change of the energy storage system, the energy storage system to be switched back to the effective operational state.

According to a second aspect of the invention, a charging and discharging control device for an energy storage system is provided. The energy storage system comprises a bidirectional DC-to-DC converter and a battery module. The bidirectional DC-to-DC converter comprises an LLC resonant converter and a boost-buck converter which are used to be sequentially cascaded with the battery module. The device comprises: a condition acquisition unit, used to acquire a running condition of the energy storage system in an effective operational state; an effective operation exit unit, used to control, if it is determined according to the running condition that a preset protection trigger condition for the battery module is satisfied currently, the LLC resonant converter to be in an operational mode and switch the boost-buck converter from an operational mode to a standby mode to make the battery module to enter a standby state; and an effective operation entry unit, which is used to control, when the battery module is triggered to exit the standby state based on an external change of the energy storage system, the energy storage system to be switched back to the effective operational state.

According to a third aspect of the invention, an electronic apparatus, applied to an energy storage system, is provided, comprising: a memory, a processor, and a computer program stored on the memory and executable on the processor, wherein the processor, upon executing the computer program, implements the above charging and discharging control method for the energy storage system.

### BRIEF DESCRIPTION OF DRAWINGS

In order to more clearly illustrate the technical solutions in the embodiments of the invention, the following briefly introduces the accompanying drawings required for describing the embodiments. Obviously, the drawings described below are some embodiments of the invention. For those skilled in the art, other accompanying drawings can be obtained based on these accompanying drawings without any creative work.
FIG. 1 shows a schematic diagram illustrating an application scenario for an energy storage system according to some embodiments of the invention;
FIG. 2 shows a flow chart of a charging and discharging control method for an energy storage system according to some embodiments of the invention;
FIG. 3 shows a schematic diagram illustrating state switching of the energy storage system involved in FIG. 2;
FIG. 4 shows a functional module diagram of a charging and discharging control device for an energy storage system according to some embodiments of the invention; and
FIG. 5 shows a schematic structural diagram of an electronic apparatus according to some embodiments of the invention.

### DETAILED DESCRIPTION

The technical solutions in the embodiments of the invention will be clearly and completely described below in conjunction with the accompanying drawings in the embodiments of the invention. Obviously, the described embodiments are only a portion of the embodiments, rather than all the embodiments of the invention. Based on the embodiments in the invention, all other embodiments obtained by those skilled in the art without making any creative work shall fall within the scope of protection of the invention.

In the invention, descriptions such as "first", "second", etc. are only used for descriptive purposes and cannot be understood as indicating or implying their relative importance or implicitly indicating the number of the indicated technical features. Therefore, the features defined as "first" or "second" may explicitly or implicitly comprise at least one of the features. The technical solutions between the various embodiments can be combined with each other, but they must be based on the fact that they can be implemented by those skilled in the art. When the combination of technical solutions is contradictory or cannot be implemented, it should be deemed that such combination of technical solutions does not exist and is not within the scope of protection required by this invention.

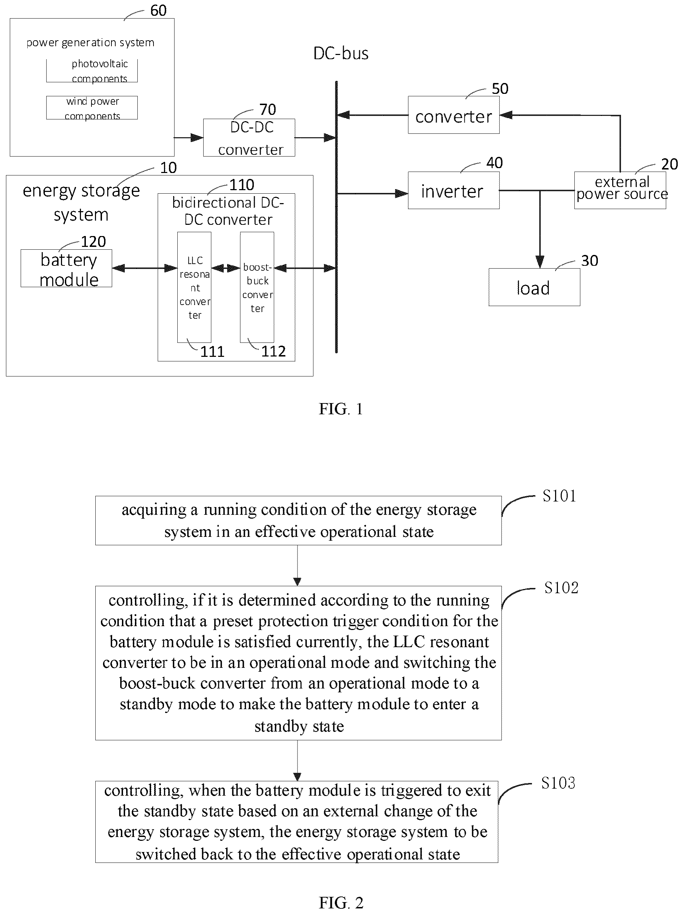

A charging and discharging control method for an energy storage system is provided according to embodiments of the invention. As shown in FIG. 1, the energy storage system 10 comprises a bidirectional DC-to-DC converter 110 and a battery module 120. The bidirectional DC-to-DC converter 110 is used to connect the battery module 120 to a DC bus (not shown). The bidirectional DC-to-DC converter 110 comprises an LLC resonant converter 111 and a boost-buck converter (boost/buck converter) 112 which are used to be sequentially cascaded with the battery module 120. It should be noted that the bidirectional DC-to-DC converter 110 is used to realize a bidirectional flow of DC power. The LLC resonant converter 111 is used to increase a voltage of the battery module 120 to be within an effective controllable range of the boost-buck converter 112. The boost-buck converter 112 can increase or decrease an input voltage to meet needs of a DC-bus voltage. In actual application scenarios, multiple loads 30 may also be provided which may be connected to the DC bus through an inverter 40; an external power source 20 may also be provided which may be connected to the DC bus through a converter 50; a power generation system 60 (such as photovoltaic components, wind power components) may also be provided which may be connected to the DC bus through a DC-to-DC converter 70.

As shown in FIG. 2, the charging and discharging control method for the energy storage system provided according to an embodiment of the invention may comprise steps S101 to S103. The charging and discharging control method for the energy storage system is described below in conjunction with FIG. 1 and FIG. 2.

In step S101, a running condition of the energy storage system in an effective operational state is acquired.

It should be noted that the effective operational state refers to a state while the energy storage system 10 performs a normal charging or discharging operation and no warning information is sent out. Optionally, performing a normal charging or discharging operation may comprise two situations that: the battery module 120 supplies power to the load 30; and the external power source 20 charges the battery module 120. When the energy storage system 10 is in the effective operational state, the LLC resonant converter 111 and the boost-buck converter 112 are both in an operational mode, to enable the battery module 120 to discharge to the outside or be charged by the external power source 20.

It should be noted that an acquired running condition may comprise one or more information comprising: a charging and discharging current of the energy storage system 10, a connection state between the energy storage system 10 and a power grid (grid-connected state or off-grid state), a current state-of-charge (SOC) of the battery module 120, and a charging and discharging state of the battery module 120.

The energy storage system 10 being in a grid-connected state indicates that the external power source 20 is connected to the energy storage system 10, and the external power source 20 can charge the battery module 120. On the contrary, the off-grid state indicates that the external power source 20 is disconnected from the energy storage system 10, and the external power source 20 cannot charge the battery module 120.

In step S102: if it is determined that, according to the running condition, a preset protection trigger condition for the battery module is satisfied currently, the LLC resonant converter is controlled to be in an operational mode and the boost-buck converter is switched from an operational mode to a standby mode to make the battery module to enter a standby state.

After a protection trigger condition is satisfied, the LLC resonant converter 111 is controlled to be in the operational mode and the boost-buck converter 112 is switched from the operational mode to the standby mode, to make the battery module 120 to stop charging and discharging to protect the battery module 120 and reduce a degradation of the battery module 120.

It should be understood that one or more protection trigger conditions may be set. Upon any protection trigger condition is satisfied, the LLC resonant converter 111 is controlled to be in the operational mode and the boost-buck converter 112 is switched from the operational mode to the standby mode. The following shows three situations where the protection trigger condition is currently satisfied.

Situation 1: a high-electric quantity maintenance state can be set relative to the effective operational state of the energy storage system 10. The high-electric quantity maintenance state of the energy storage system 10 refers to a state in which the current SOC of the battery module 120 is higher than a preset first charging cut-off SOC and no further charging continues, and is a protection state set to prevent the battery module 120 in a high-battery state from being overcharged.

In a condition that the energy storage system 10 is in an effective operational state, if the charging and discharging state of the battery module 120 is that the battery module is continuously in a charging state within a first preset duration and the current SOC of the battery module 120 is greater than a preset first charging cut-off SOC, it is determined that the protection trigger condition is currently satisfied. At this time, by controlling the LLC resonant converter 111 to be in the operational mode and switching the boost-buck converter 112 from the operational mode to the standby mode, the battery module 120 is made to enter the standby state, and in turn the energy storage system 10 is switched from the effective operational state to the high-electric quantity maintenance state.

The bidirectional DC-to-DC converter 110 can establish communication with a Battery Management System (BMS) of the battery module 120 to acquire the current SOC of the battery module 120 and determine a relationship between the current SOC and a first charging cut-off SOC.

It should be noted that the first preset duration is set to prevent accidental errors. Optionally, the first preset duration is set to avoid a misjudging that the battery module 120 is in a charging state due to a temporary increase in a charging current. In the process of implementation, the first preset duration may be a value in seconds. Optionally, the first preset duration may be 4 seconds.

It should be noted that a first charging cut-off SOC is used to characterize a high-battery state of the battery module 120. Optionally, the first charging cut-off SOC may be 95%. Optionally, the first charging cut-off SOC is not limited to the above examples. In the process of implementation, the first charging cut-off SOC is revisable within a preset range. In a condition that the battery module 120 is continuously in a charging state within a first preset duration, if the current SOC of the battery module 120 is greater than the preset first charging cut-off SOC, the boost-buck converter 112 is switched from the operational mode to the standby mode to forbid the battery module 120 to continue being charged, effectively preventing the battery module 120 from being overcharged.

It can be understood that monitoring whether the battery module 120 is continuously in a charging state within a first preset duration may be to monitor a magnitude of a charging and discharging current of the battery module 120. If it is monitored that the magnitude of the charging and discharging current is continuously less than a first current threshold in a first preset duration, it is characterized that the battery module 120 is continuously in a charging state in the first preset duration. Optionally, the first current threshold should be a negative value. Optionally, the first current threshold may be set as -1A.

Situation 2: a no-load maintenance state can be set relative to the effective operational state of the energy storage system 10. The no-load maintenance state refers to a state in which the energy storage system 10 is not connected to an external load 30, and is a protection state for preventing a power degradation of the battery module 120.

Based on this, if it is monitored that the magnitude of the charging and discharging current of the battery module 120 is continuously within a preset first current range within a second preset duration, it is determined that the protection trigger condition is currently satisfied. At this time, by controlling the LLC resonant converter 111 to be in the operational mode and switching the boost-buck converter 112 from the operational mode to the standby mode, the battery module 120 is made to enter the standby state, and in turn the energy storage system 10 is switched from the effective operational state to the no-load maintenance state to avoid the power degradation of the battery module 120.

It should be noted that the second preset duration is set to prevent accidental errors. Optionally, the second preset duration is set to avoid misjudging that the energy storage system 10 is not connected to the external load 30 due to a temporary decrease in the charging and discharging current. In the process of implementation, the second preset duration may be a value in seconds. Optionally, the second preset duration may be set as 10 seconds.

It should be noted that the first current range may be a current range characterizing a state in which the battery module 120 is neither charged nor discharged. A current value within the first current range is a small current value. Optionally, it may be monitored whether an absolute value of the charging and discharging current is continuously in the first current range within the second preset duration. Based on this, the first current range is a positive value interval, which can be 0A to 1A. Optionally, it may also be monitored whether the charging and discharging current is continuously in the first current range within the second preset duration. Based on this, the first current range is a positive and negative value interval, which can be -1A to 1A.

Situation 3: a standing-electric quantity maintenance state may be set relative to the effective operational state of the energy storage system 10. The standing-electric quantity maintenance state refers to a state in which the current SOC of the battery module 120 is lower than a preset first standby SOC in a grid-connected state. Therefore, the standing-electric quantity maintenance state is a protection state that is set to prevent, in the grid-connected state, the battery module 120 in a low-electric quantity state from continuing to supply power to the external load 30.

Based on this, in a condition that the energy storage system 10 is in a grid-connected state, if the current SOC of the battery module 120 is less than the preset first standby SOC and a charging and discharging state of the battery module 120 is that the battery module is continuously in a discharging state within a third preset duration, it is determined that the protection trigger condition is currently satisfied. At this time, by controlling the LLC resonant converter 111 to be in the operational mode and switching the boost-buck converter 112 from the operational mode to the standby mode, not only the battery module 120 is made to enter the standby state, but also the energy storage system 10 is switched from the effective operational state to a standing-electric quantity maintenance state, to avoid a power degradation of the battery module 120.

It should be noted that the first standby SOC is used to characterize that the battery module 120 has entered a low-electric quantity state. Optionally, the first standby SOC may be set as 20%. A user can modify the first standby SOC within a preset range. If in the grid-connected state, the current SOC of the battery module 120 is less than the preset first standby SOC, the battery module 120 is, by switching the boost-buck converter 112 from the operational mode to the standby mode, forbidden to continue discharging.

It should be noted that the third preset duration is set to prevent accidental errors. Optionally, the third preset duration is set to avoid a misjudging that the battery module 120 is in a discharging state due to a temporary increase in the discharging current. In the process of implementation, the third preset duration may be a value in seconds. Optionally, the third preset duration may be set as 4 seconds.

It can be understood that monitoring whether the battery module 120 is continuously in a discharging state within a third preset duration may be to monitor a magnitude of the charging and discharging current of the battery module 120. If the magnitude of the charging and discharging current of the battery module 120 is monitored to be greater than a second current threshold, it is characterized that the battery module 120 is in a discharging state. Optionally, the second current threshold should be a positive value. Optionally, the second current threshold may be set as 1A.

It can be understood that in the above step S102 the battery module 120 is made to enter the standby state in order to avoid the battery degradation caused by the power degradation, the overcharging and the like of the battery module 120. Therefore, the battery module 120 needs to be restored to an effective operational state under a certain external condition. Thus, after step S102, step S103 should also be comprised. In step S103, the energy storage system is controlled, when the battery module is triggered to exit the standby state based on an external change of the energy storage system, to be switched back to the effective operational state.

It is understandable that corresponding to the above three situations that trigger the battery module 120 to enter the standby state, there correspondingly should also be three situations that cause the battery module 120 to exit the standby state. The following describes three situations in which the battery module 120 exits the standby state.

Corresponding situation 1: if it is monitored that the energy storage system 10 is connected to an external load 30 or the current SOC of the battery module 120 is less than the preset second charging cut-off SOC, the boost-buck converter 112 is switched from the standby mode back to the operational mode to make the battery module 120 to exit the standby state and discharge to maintain a DC-bus voltage, the first charging cut-off SOC being greater than the second charging cut-off SOC; and the energy storage system 10 is switched from the high-electric quantity maintenance state back to the effective operational state.

The magnitude of the charging and discharging current of the battery module 120 may be monitored. If the magnitude of the charging and discharging current is greater than a third current threshold, it is characterized that the battery module 120 is in a discharging state. In the process of implementation, the third current threshold should be a positive value. Optionally, the third current threshold may be set as 4A.

It should be noted that a second charging cut-off SOC is used to characterize a high-battery state of the battery module 120. Optionally, if the first charging cut-off SOC is 95%, the second charging cut-off SOC may be 93%. A user can modify the second charging cut-off SOC within a preset range. In a condition that it is monitored that the energy storage system 10 is connected to an external load 30, if the current SOC of the battery module 120 is less than a preset second charging cut-off SOC, the battery module 120 is controlled to exit the standby state and supply power to the external load 30. Optionally, the first charging cut-off SOC is greater than the second charging cut-off SOC, but the first charging cut-off SOC and the second charging cut-off SOC cannot differ too much, in order to prevent the energy storage system 10 from frequently switching between the high-electric quantity maintenance state and the effective operational state, thereby affecting systematic stability.

Corresponding situation 2: if it is monitored that the magnitude of the charging and discharging current of the battery module 120 is within a preset second current range, the boost-buck converter 112 is switched from the standby mode back to the operational mode to make the battery module 120 to exit the standby state and discharge to maintain a DC-bus voltage, a lower limit value of the second current range being greater than an upper limit value of the first current range; and the energy storage system is switched from the no-load maintenance state back to the effective operational state.

It should be noted that the second current range characterizes a current range of the battery module 120 while charging or discharging. A current value in the second current range is a large current value. Optionally, it may be monitored whether an absolute value of the charging and discharging current of the battery module 120 is within the second current range. Based on this, the second current range is a positive value interval. Optionally, the second current range can be set as 4A to positive infinity. Optionally, it may also be monitored whether the charging and discharging current is within the second current range. Based on this, the second current range is a positive and negative value interval. Optionally, the second current range can be set to be (-∞, -4A], [4A, ∞].

Corresponding situation 3: if it is monitored that the energy storage system 10 is not in the grid-connected state (i.e., in the off-grid state), the current SOC of the battery module 120 is greater than a preset second standby SOC, or the charging and discharging state is that an external power source 20 is supplying power to the energy storage system 10, then the boost-buck converter 112 is switched from the standby mode back to the operational mode to make the battery module to exit the standby state and discharge after exiting the standby state to maintain a DC-bus voltage, the first standby SOC being less than the second standby SOC; and the energy storage system 10 is switched from the standing-electric quantity maintenance state back to the effective operational state.

It should be noted that the second standby SOC is used to characterize a low-electric quantity state of the battery module 120. Optionally, if the first standby SOC is set to be 20%, then the second standby SOC may be set as 22%. A user can modify the second standby SOC within a preset range. If the current SOC of the battery module 120 is greater than the second standby SOC, the battery module 120 is controlled to exit the standby state and start operating. Optionally, the first standby SOC is smaller than the second standby SOC, but the first standby SOC and the second standby SOC cannot differ too much. A purpose of setting in this way is to prevent accidental errors from causing the energy storage system 10 to frequently switch between the standing-electric quantity maintenance state and the effective operational state.

It should be noted that in addition to corresponding situations 1, 2 and 3, in which it is switched back to the effective operational state from other states, three states may also be set: a low-electric quantity start-up pre-charging state, a low-electric quantity charging-discharging state, and a fully discharged state. Optionally, the low-electric quantity start-up pre-charging state is a state that the energy storage system 10 when turned on or restarted enters. The low-electric quantity charging-discharging state refers to a state in which the energy storage system 10, when the energy storage system 10 is in an off-grid state and the current SOC of the battery module 120 is less than a preset first warning SOC, is. The fully discharged state is a state in which the current SOC of the battery module 120 is lower than that of the low-electric quantity charging-discharging state. Based on this, the situation of switching back to the effective operational state also comprises situations A1 to A2.

Situation A1: if the current SOC of the battery module 120 is greater than a preset low-electric quantity start-up SOC when the energy storage system 10 is started, the energy storage system 10 is switched from the low-electric quantity start-up pre-charging state to the effective operational state.

It should be noted that the low-electric quantity start-up SOC is used to characterize a low-electric quantity state of the battery module 120. A user cannot modify the low-electric quantity start-up SOC. Optionally, the low-electric quantity start-up SOC may be 10% state of charge.

It should be understood that the energy storage system 10, when started, first enters the low-electric quantity start-up pre-charging state. The LLC resonant converter 111 and the boost-buck converter 112 are both in an operational mode in the low-electric quantity start-up pre-charging state. In the low-electric quantity start-up pre-charging state of the energy storage system 10, a charging or discharging operation can be implemented normally.

Situation A2: if it is monitored that the current SOC of the battery module 120 is greater a preset second warning SOC in a condition that the energy storage system 10 is in a low-electric quantity charging-discharging state, the energy storage system 10 is switched from the low-electric quantity charging-discharging state to the effective operational state, the first warning SOC being less than the second warning SOC.

It should be noted that the second warning SOC is used to characterize a low-electric quantity state of the battery module. Optionally, if the first warning SOC is 10% state of charge, the second warning SOC may be 12% state of charge. A user cannot modify the second warning SOC. Optionally, the first warning SOC is less than the second warning SOC, but the first warning SOC and the second warning SOC cannot differ too much. A purpose of setting in this way is to prevent accidental errors from causing the energy storage system 10 to frequently switch between the low-electric quantity charging-discharging state and the effective operational state.

It should be noted that the energy storage system 10 can continue to be charged and discharged in the low-electric quantity charging-discharging state, will control the LLC resonant converter 111 and the boost-buck converter 112 to be in the operational mode, and output a second warning information which is used to prompt that a battery is low.

It can be understood that, if it is monitored that the energy storage system 10 is in an off-grid state and the current SOC of the battery module 120 is less than the preset first warning SOC in a condition that the energy storage system 10 is in an effective operational state, a second warning information is output which is used to prompt that a battery is low; and the energy storage system 10 is switched from the effective operational state to a low-electric quantity charging-discharging state.

It should be noted that the first warning SOC is used to characterize a low-electric quantity state of the battery module. A user cannot modify the first warning SOC. Optionally, the first warning SOC may be 10% state of charge.

It should be noted that all the above-mentioned states are states that there is still electrical energy stored in the energy storage system 10. Optionally, a fully discharged state of the energy storage system 10 may also be set. In a condition that the energy storage system 10 is in a fully discharged state, the LLC resonant converter 111 and the boost-buck converter 112 are controlled to be in a sleep mode, and a first warning information is output. The first warning information is used to prompt that the battery module 120 is fully discharged. There may be the following two situations B1 and B2, which cause the energy storage system 10 to enter a fully discharged state.

Situation B1: if it is monitored that a current SOC of the battery module 120 is less than a discharging cut-off SOC in a condition that the energy storage system 10 is in a low-electric quantity charging-discharging state, the LLC resonant converter 111 and the boost-buck converter 112 are controlled to be in a sleep mode, and a first warning information is output, the discharging cut-off SOC being less than the first warning SOC; and the energy storage system 10 is switched from the low-electric quantity charging-discharging state to a fully discharged state.

It should be noted that the discharging cut-off SOC is used to characterize the fully discharged state of the battery module 120. Optionally, the discharging cut-off SOC may be 2% state of charge. A user can modify the discharging cut-off SOC within a preset range. If the current SOC of the battery module 120 is less than the discharging cut-off SOC, the battery module 120 is forbidden to continue discharging, to prevent the battery module 120 from degrading.

Situation B2: before a running condition of the energy storage system 10 in an effective operational state is acquired, the following may also be comprised: when the energy storage system 10 is started, the energy storage system 10 is in a low-electric quantity start-up pre-charging state, and if a DC-bus voltage is continuously less than a preset first reference value within a fourth preset duration, or the battery module 120 is continuously in a discharging state within the fourth preset duration, the LLC resonant converter 111 and the boost-buck converter 112 are controlled to be in a sleep mode, and a first warning information is output, the first warning information being used to prompt that the battery module 120 is fully discharged; and the energy storage system 10 is switched from the low-electric quantity start-up pre-charging state to the fully discharged state.

It should be noted that the fourth preset duration is set to prevent accidental errors. Optionally, the fourth preset duration is set to avoid misjudging caused by the DC-bus voltage being temporarily less than the first reference value. In the process of implementation, the fourth preset duration may be 1 minute. There are two situations for a value of the first reference value. If it is in an off-grid state, the first reference value is a predetermined fixed voltage value; if it is in a grid-connected state, the first reference value is given according to a systematic state

It can be understood that, if a DC-bus voltage is continuously greater than a preset second reference value within a fifth preset duration in a condition that the energy storage system 10 is in a fully discharged state, the LLC resonant converter 111 and the boost-buck converter 112 are controlled to be switched to an operational mode, the first reference value being less than the second reference value; and the energy storage system 10 is switched from the fully discharged state to the low-electric quantity start-up pre-charging state.

It should be noted that the fifth preset duration is set to prevent accidental errors. Optionally, the fifth preset duration is set to avoid a problem of misjudging caused by a temporary increase in the DC-bus voltage. In the process of implementation, the fifth preset duration may be 1 minute. There are two situations for a value of the second reference value. If it is in an off-grid state, the second reference value is a predetermined fixed voltage value; if it is in a grid-connected state, the second reference value is given according to a systematic state. Optionally, the first reference value is less than the second reference value. A purpose of setting in this way is to prevent a fluctuation of the DC-bus voltage from causing the energy storage system 10 to frequently switch between the fully discharged state and the low-electric quantity start-up pre-charging state.

In the embodiments of the invention, a running condition of the energy storage system in an effective operational state can be acquired. If it is determined according to the running condition that a preset protection trigger condition for the battery module is satisfied currently, the LLC resonant converter is controlled to be in an operational mode and the boost-buck converter is switched from an operational mode to a standby mode to make the battery module to enter a standby state. When the battery module is triggered to exit the standby state on the basis of external changes of the energy storage system, the energy storage system is caused to return to the effective operational state, to be normally charged and discharged. After a protection trigger condition is satisfied, the LLC resonant converter is controlled to be in the operational mode and the boost-buck converter is switched from the operational mode to the standby mode, and thus the battery module can stop charging and discharging outward to enter a standby state to protect the battery module, and in turn a technical problem of excessive battery degradation can be solved.

If the current DC-bus voltage is lower than a reference value when the energy storage system 10 is turned on or restarted, the energy storage system 10 enters a low-electric quantity start-up pre-charging state. If the current SOC of the battery module 120 is greater than a low-electric quantity start-up value, the energy storage system 10 enters an effective operational state.

The energy storage system 10 is in an effective operational state most of the time and switched among various pre-set states.

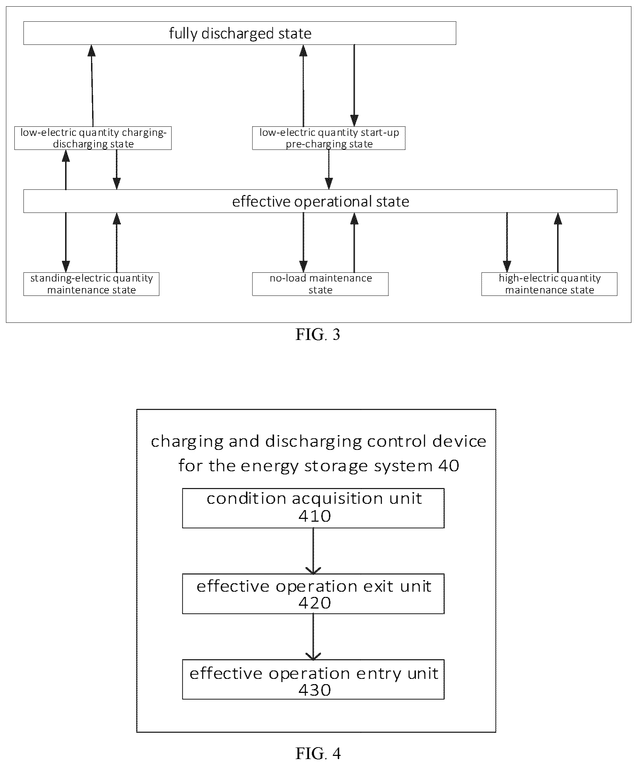

In order to enhance an understanding of a switching process of the energy storage system among various set states, an illustration is given below with reference to FIG. 3.

In an effective operational state, if a battery module is continuously in a charging state within a first preset duration and the current SOC of the battery module is greater than a preset first charging cut-off SOC, an energy storage system is switched from an effective operational state to a high-electric quantity maintenance state.

In the high-electric quantity maintenance state, if it is monitored that the energy storage system is connected to an external load or the current SOC of the battery module is less than a preset second charging cut-off SOC, the energy storage system is switched from the high-electric quantity maintenance state back to the effective operational state.

In the effective operational state, if it is monitored that a charging and discharging current of the battery module is continuously within a preset first current range within the second preset duration, the energy storage system is switched from the effective operational state to a no-load maintenance state.

In the no-load maintenance state, if it is monitored that the magnitude of the charging and discharging current of the battery module is within a preset second current range, the energy storage system is switched from the no-load maintenance state back to the effective operational state.

In the effective operational state, in a condition that the energy storage system is in a grid-connected state, if a current SOC of the battery module is less than a preset first standby SOC and is continuously in a discharging state within a third preset duration, the energy storage system is switched from the effective operational state to a standing-electric quantity maintenance state.

In the standing-electric quantity maintenance state, if it is monitored that the energy storage system is in an off-grid state, the current SOC of the battery module is greater than a preset second standby SOC, or an external power source is supplying power to the energy storage system, the energy storage system is switched from the standing-electric quantity maintenance state back to the effective operational state.

In a low-electric quantity start-up pre-charging state, if a DC-bus voltage is continuously less than a preset first reference value within a fourth preset duration, or the battery module is continuously in a discharging state within a fourth preset duration, the energy storage system is switched from a low-electric quantity start-up pre-charging state to a fully discharged state.

In the low-electric quantity start-up pre-charging state, if the current SOC of the battery module is greater than a preset low-electric quantity start-up SOC, the energy storage system is switched from the low-electric quantity start-up pre-charging state to the effective operational state.

In the effective operational state, if it is monitored that the energy storage system is in an off-grid state and the current SOC of the battery module is less than a preset first warning SOC, the energy storage system is switched from the effective operational state to a low-electric quantity charging-discharging state.

In the low-electric quantity charging-discharging state, if it is monitored that the current SOC of the battery module is less than a discharging cut-off SOC, the energy storage system is switched from the low-electric quantity charging-discharging state to a fully discharged state.

In the low-electric quantity charging-discharging state, if it is monitored that the current SOC of the battery module is greater than a preset second warning SOC, the energy storage system is switched from the low-electric quantity charging-discharging state to the effective operational state.

In the fully discharged state, if a DC-bus voltage is continuously greater than a preset second reference value within a fifth preset duration, the energy storage system is switched from the fully discharged state to the low-electric quantity start-up pre-charging state.

Based on the same concept, a charging and discharging control device for an energy storage system 40 is provided according to an embodiment of the invention. The energy storage system comprises a bidirectional DC-to-DC converter and a battery module. The bidirectional DC-to-DC converter comprises an LLC resonant converter and a boost-buck converter which are used to be sequentially cascaded with the battery module. As shown in FIG. 4, the charging and discharging control device for the energy storage system comprises: a condition acquisition unit 410, which is used to acquire a running condition of the energy storage system in an effective operational state; an effective operation exit unit 420, which is used to control, if it is determined according to the running condition that a preset protection trigger condition for the battery module is satisfied currently, the LLC resonant converter to be in an operational mode and switch the boost-buck converter from an operational mode to a standby mode to make the battery module to enter a standby state; and an effective operation entry unit 430, which is used to control, when the battery module is triggered to exit the standby state based on an external change of the energy storage system, the energy storage system to be switched back to the effective operational state.

It can be understood that the running condition comprises the current SOC and the charging and discharging state of the battery module. The effective operation exit unit 420 also comprises a high-battery exit subunit. The high-battery exit subunit is used to: determine that a protection trigger condition is currently satisfied if a charging and discharging state of the battery module is that the battery module is continuously in a charging state within a first preset duration and the current SOC of the battery module is greater than a preset first charging cut-off SOC; and switch the energy storage system from an effective operational state to a high-battery maintenance state.

It can be understood that the effective operation entry unit 430 also comprises: a high-battery entry sub-unit. The high-battery entry sub-unit is used to: switch, if it is monitored that the energy storage system is connected to an external load or the current SOC of the battery module is less than a preset second charging cut-off SOC, the boost-buck converter from the standby mode back to the operational mode to make the battery module to exit the standby state and discharge to maintain a DC-bus voltage, the first charging cut-off SOC being greater than the second charging cut-off SOC; and switch the energy storage system from the high-electric quantity maintenance state back to the effective operational state.

It can be understood that the running condition comprises a magnitude of the charging and discharging current of the battery module. The effective operation exit unit 420 also comprises: a no-load exit subunit. The no-load exit subunit is used to: determine, if it is monitored that the magnitude of the charging and discharging current of the battery module is continuously within a preset first current range within a second preset duration, that a protection trigger condition is currently satisfied; and switch the energy storage system from the effective operational state to a no-load maintenance state.

It can be understood that the effective operation entry unit 430 also comprises: a no-load entry sub-unit. The no-load entry sub-unit is used to: switch, if it is monitored that the magnitude of the charging and discharging current of the battery module is within a preset second current range, the boost-buck converter from the standby mode back to the operational mode to make the battery module to exit the standby state and discharge to maintain a DC-bus voltage, a lower limit value of the second current range being greater than an upper limit value of the first current range; and switch the energy storage system from the no-load maintenance state back to the effective operational state.

It can be understood that the running condition comprises whether the energy storage system is in a grid-connected state, a current SOC and a charging and discharging state of the battery module. The effective operation exit unit 420 also comprises: a standing exit subunit. The standing exit subunit is used to: determine, if the current SOC of the battery module is less than a preset first standby SOC and the charging and discharging state of the battery module is that the battery module is continuously in a discharging state within a third preset duration in a condition that the energy storage system is in a grid-connected state, that the protection trigger condition is currently satisfied; and switch the energy storage system from the effective operational state to a standing-electric quantity maintenance state.

It can be understood that the effective operation entry unit 430 also comprises: a standing entry subunit. The standing entry subunit is used to: switch the boost-buck converter from the standby mode back to the operational mode to make the battery module to exit the standby state and discharge to maintain a DC-bus voltage, if it is monitored that the energy storage system is not in the grid-connected state, the current SOC of the battery module is greater than a preset second standby SOC, or the charging and discharging state is that an external power source is supplying power to the energy storage system, the first standby SOC being less than the second standby SOC; and switch the energy storage system from the standing-electric quantity maintenance state back to the effective operational state.

It can be understood that the charging and discharging control device for the energy storage system 40 also comprises: a first fully discharged switching unit used to control, if a DC-bus voltage is continuously less than a preset first reference value within a fourth preset duration or the battery module is continuously in a discharging state within the fourth preset duration when the energy storage system is started, the LLC resonant converter and the boost-buck converter to be in a sleep mode, and output a first warning information, the first warning information being used to prompt that the battery module is fully discharged, and the first fully discharged switching unit is used to switch the energy storage system from a low-electric quantity start-up pre-charging state to a fully discharged state; and a first effective operation switching unit, which is used to switch, if a current SOC of the battery module is greater than a preset low-electric quantity start-up SOC when the energy storage system is started, the energy storage system from the low-electric quantity start-up pre-charging state to the effective operational state.

It can be understood that the charging and discharging control device for the energy storage system 40 also comprises: a low-electric quantity switching unit, which is used to output, if it is monitored that the energy storage system is in an off-grid state and the current SOC of the battery module is less than a preset first warning SOC in a condition that the energy storage system is in the effective operational state, a second warning information which is used to prompt that the battery module has low electric quantity, and the low-electric quantity switching unit is used to switch the energy storage system from the effective operational state to a low-electric quantity charging-discharging state; and a second effective operation switching unit, which is used to switch, if it is monitored that the current SOC of the battery module is greater a preset second warning SOC in a condition that the energy storage system is in the low-electric quantity charging-discharging state, the energy storage system from the low-electric quantity charging-discharging state to the effective operational state, the first warning SOC being less than the second warning SOC.

It can be understood that the charging and discharging control device for the energy storage system 40 further comprises: a second fully discharged switching unit, which is used to control, if it is monitored that the current SOC of the battery module is less than a discharging cut-off SOC, the LLC resonant converter and the boost-buck converter to be in a sleep mode, and output a first warning information, the discharging cut-off SOC being less than the first warning SOC, and the second fully discharged switching unit is used to switch the energy storage system from the low-electric quantity charging-discharging state to a fully discharged state; and a start-up pre-charge switching unit, which is used to control, if a DC-bus voltage is continuously greater than a preset second reference value within a fifth preset duration in a condition that the energy storage system is in the fully discharged state, the LLC resonant converter 111 and the boost-buck converter to be switched to an operational mode, the first reference value being less than the second reference value, and the start-up pre-charge switching unit is used to switch the energy storage system from the fully discharged state to the low-electric quantity start-up pre-charging state.

It should be understood that more implementation details of the charging and discharging control device for the energy storage system 40 in the embodiment of the invention refer to descriptions of embodiments of the above charging and discharging control method for the energy storage system, which are not repeated here for the sake of brevity of the specification.

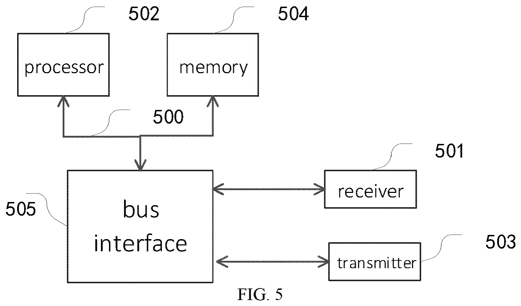

Based on the same concept, an electronic apparatus is further provided according to an embodiment of the invention. As shown in FIG. 5, the electronic apparatus comprises a memory 504, a processor 502, and a computer program stored in the memory 504 and executable on the processor 502. The processor 502 executes the computer program to implement steps described in any embodiment of the charging and discharging control method for the energy storage system.

In FIG. 5, a bus architecture is represented by bus 500, which may comprise any number of interconnected buses and bridges. The bus 500 links together various circuits comprising one or more processors represented by processor 502 and one or more memories represented by memory 504. The bus 500 may also link together various other circuits such as peripheral apparatuses, voltage regulators, and power management circuits, which are well known in the art and therefore will not be described herein. A bus interface 505 provides an interface between the bus 500 and a receiver 501, and an interface between the bus 500 and a transmitter 503. The receiver 501 and the transmitter 503 may be the same element, i.e., a transceiver, which provides a unit for communicating with various other devices over a transmission medium. The processor 502 is responsible for managing the bus 500 and general processing, while the memory 504 may be used to store data used by the processor 502 when performing operations.

In the embodiments of the invention, a running condition of the energy storage system in an effective operational state can be acquired. If it is determined according to the running condition that a preset protection trigger condition for the battery module is satisfied currently, the LLC resonant converter is controlled to be in an operational mode and the boost-buck converter is switched from an operational mode to a standby mode to make the battery module to enter a standby state. When the battery module is triggered to exit the standby state on the basis of external changes of the energy storage system, the energy storage system is caused to return to the effective operational state, to be normally charged and discharged. After a protection trigger condition is satisfied, the LLC resonant converter is controlled to be in the operational mode and the boost-buck converter is switched from the operational mode to the standby mode to make the battery module to stop charging and discharging outward to make the battery module to enter a standby state to protect the battery module, and in turn a technical problem of excessive battery degradation can be solved and a battery life can be increased.

The functions described herein may be implemented in hardware, software executed by a processor, firmware, or any combination thereof. The functions, if implemented in software executed by a processor, may be stored on or transmitted over as one or more instructions or code on a computer-readable medium. Other examples and implementations are within the scope and spirit of the invention and appended claims. For example, due to the nature of software, the functions described above may be implemented by using software executed by a processor, hardware, firmware, hardwiring, or a combination of any of these. In addition, various functional units may be integrated into one processing unit, or various functional units may exist physically separately, or two or more units may be integrated into one unit.

In the several embodiments provided in the invention, it should be understood that the disclosed technical contents can be implemented in other ways. The device embodiments described above are merely illustrative. For example, the division of the units may be a logical function division. There may be other division methods in actual implementation. For example, multiple units or components may be combined or integrated into another system, or some features may be ignored or not executed. Another point is that the mutual coupling or direct coupling or communication connection shown or discussed may be an indirect coupling or communication connection through some interfaces, units or modules, and may be electrical or other forms.

The units described as separate components may or may not be physically separated. The components as the control device may or may not be physical units, that is, they may be located in one place or distributed on multiple units. Some or all the units may be selected according to actual needs to achieve the purpose of the solution in this embodiment.

The integrated unit, if implemented in the form of a software functional unit and sold or used as an independent product, can be stored in a computer-readable storage medium. Based on such understanding, the technical solution of the invention may essentially or the portion of the invention that contributes to the related art, or all or a portion of the technical solution of the invention may be embodied in the form of a computer software product. The computer software product is stored in a storage medium and comprises a number of instructions for enabling a computer device (which may be a personal computer, a server or a network apparatus, etc.) to execute all or part of the steps of the method described in various embodiments of the invention. The aforementioned storage media comprises: U disk, read-only memory (ROM), random access memory (RAM), mobile hard disk, magnetic disk or optical disk and other media that can store program codes.

The above descriptions are merely embodiments of the invention and are not intended to limit the invention. For those skilled in the art, the invention may have various modifications and changes. Any modifications, equivalent substitutions, improvements, etc. made within the spirit and principles of this invention should be included in the scope of the claims of this invention.

## Claims

1. A charging and discharging control method for an energy storage system, wherein the energy storage system comprises a bidirectional DC-to-DC converter and a battery module, the bidirectional DC-to-DC converter comprises an LLC resonant converter and a boost-buck converter which are used to be sequentially cascaded with the battery module, and the method comprises:
acquiring a running condition of the energy storage system in an effective operational state;
controlling, if it is determined according to the running condition that a preset protection trigger condition for the battery module is satisfied currently, the LLC resonant converter to be in an operational mode and switching the boost-buck converter from an operational mode to a standby mode to make the battery module to enter a standby state; and
controlling, when the battery module is triggered to exit the standby state based on an external change of the energy storage system, the energy storage system to be switched back to the effective operational state.

2. The method according to claim 1, wherein the running condition comprises a current SOC and a charging and discharging state of the battery module, and wherein the method further comprises:
determining, if the charging and discharging state of the battery module is that the battery module is continuously in a charging state within a first preset duration and the current SOC of the battery module is greater than a preset first charging cut-off SOC, that the protection trigger condition is currently satisfied; and
switching the energy storage system from the effective operational state to a high-electric quantity maintenance state.

3. The method according to claim 2, wherein the method, after said switching the energy storage system from the effective operational state to the high-electric quantity maintenance state, further comprises:
switching, if it is monitored that the energy storage system is connected to an external load or the current SOC of the battery module is less than a preset second charging cut-off SOC, the boost-buck converter from the standby mode back to the operational mode to make the battery module to exit the standby state and discharge to maintain a DC-bus voltage, the first charging cut-off SOC being greater than the second charging cut-off SOC; and
switching the energy storage system from the high-electric quantity maintenance state back to the effective operational state.

4. The method according to claim 1, wherein the running condition comprises a magnitude of a charging and discharging current of the battery module, and the method further comprises:
determining, if it is monitored that the magnitude of the charging and discharging current of the battery module is continuously within a preset first current range within a second preset duration, that the protection trigger condition is currently satisfied; and
switching the energy storage system from the effective operational state to a no-load maintenance state.

5. The method according to claim 4, wherein the method, after said switching the energy storage system from the effective operational state to a no-load maintenance state, further comprises:
switching, if it is monitored that the magnitude of the charging and discharging current of the battery module is within a preset second current range, the boost-buck converter from the standby mode back to the operational mode to make the battery module to exit the standby state and discharge to maintain a DC-bus voltage, a lower limit value of the second current range being greater than an upper limit value of the first current range; and
switching the energy storage system from the no-load maintenance state back to the effective operational state.

6. The method according to claim 1, wherein the running condition comprises whether the energy storage system is in a grid-connected state, and a current SOC and a charging and discharging state of the battery module, and the method further comprises:
determining, if the current SOC of the battery module is less than a preset first standby SOC and the charging and discharging state of the battery module is that the battery module is continuously in a discharging state within a third preset duration in a condition that the energy storage system is in a grid-connected state, that the protection trigger condition is currently satisfied; and
switching the energy storage system from the effective operational state to a standing-electric quantity maintenance state.

7. The method according to claim 6, wherein the method, after said switching the energy storage system from the effective operational state to a standing-electric quantity maintenance state, further comprises:
switching the boost-buck converter from the standby mode back to the operational mode to make the battery module to exit the standby state and discharge to maintain a DC-bus voltage, if it is monitored that the energy storage system is not in the grid-connected state, the current SOC of the battery module is greater than a preset second standby SOC, or the charging and discharging state is that an external power source is supplying power to the energy storage system, the first standby SOC being less than the second standby SOC; and
switching the energy storage system from the standing-electric quantity maintenance state back to the effective operational state.

8. The method according to claim 1, wherein the method, before said acquiring a running condition of the energy storage system in an effective operational state, further comprises:
controlling, if a DC-bus voltage is continuously less than a preset first reference value within a fourth preset duration or the battery module is continuously in a discharging state within the fourth preset duration when the energy storage system is started, the LLC resonant converter and the boost-buck converter to be in a sleep mode, and outputting a first warning information, the first warning information being used to prompt that the battery module is fully discharged; and
switching the energy storage system from a low-electric quantity start-up pre-charging state to a fully discharged state; and
switching, if a current SOC of the battery module is greater than a preset low-electric quantity start-up SOC when the energy storage system is started, the energy storage system from the low-electric quantity start-up pre-charging state to the effective operational state.

9. The method according to claim 8, further comprising:
outputting, if it is monitored that the energy storage system is in an off-grid state and the current SOC of the battery module is less than a preset first warning SOC in a condition that the energy storage system is in the effective operational state, a second warning information which is used to prompt that the battery module has low electric quantity;
switching the energy storage system from the effective operational state to a low-electric quantity charging-discharging state; and
switching, if it is monitored that the current SOC of the battery module is greater a preset second warning SOC in a condition that the energy storage system is in the low-electric quantity charging-discharging state, the energy storage system from the low-electric quantity charging-discharging state to the effective operational state, the first warning SOC being less than the second warning SOC.

10. The method according to claim 9, wherein the method, after said switching the energy storage system from the effective operational state to a low-electric quantity charging-discharging state, further comprises:
controlling, if it is monitored that the current SOC of the battery module is less than a discharging cut-off SOC, the LLC resonant converter and the boost-buck converter to be in a sleep mode, and outputting a first warning information, the discharging cut-off SOC being less than the first warning SOC;
switching the energy storage system from the low-electric quantity charging-discharging state to a fully discharged state;
controlling, if a DC-bus voltage is continuously greater than a preset second reference value within a fifth preset duration in a condition that the energy storage system is in the fully discharged state, the LLC resonant converter and the boost-buck converter to be switched to an operational mode, the first reference value being less than the second reference value; and
switching the energy storage system from the fully discharged state to the low-electric quantity start-up pre-charging state.

11. A charging and discharging control device for an energy storage system, wherein the energy storage system comprises a bidirectional DC-to-DC converter and a battery module, the bidirectional DC-to-DC converter comprises an LLC resonant converter and a boost-buck converter which are used to be sequentially cascaded with the battery module, and the device comprises:
a condition acquisition unit, used to acquire a running condition of the energy storage system in an effective operational state;
an effective operation exit unit, used to control, if it is determined according to the running condition that a preset protection trigger condition for the battery module is satisfied currently, the LLC resonant converter to be in an operational mode and switch the boost-buck converter from an operational mode to a standby mode to make the battery module to enter a standby state; and
an effective operation entry unit, used to control, when the battery module is triggered to exit the standby state based on an external change of the energy storage system, the energy storage system to be switched back to the effective operational state.

12. An electronic apparatus, applied to an energy storage system, comprising: a memory, a processor, and a computer program stored on the memory and executable on the processor, wherein the processor, upon executing the computer program, implements the method according to any one of claims 1 to 10.
